# EUROPÄISCHE PATENTSCHRIFT

(11) **EP 3 526 273 B1**
(45) Veröffentlichungstag und Bekanntmachung des Hinweises auf die Patenterteilung: **09.12.2020**
(21) Anmeldenummer: 17772744.3
(22) Anmeldetag: 02.10.2017
(51) Int. Cl.: C08G 63/47, C08G 63/91, C09D 167/06

(54) **STRAHLUNGSHÄRTBARE POLYESTERACRYLAT-HALTIGE ZUSAMMENSETZUNGEN**
RADIATION CURABLE POLYESTERACRYLATE-CONTAINING COMPOSITIONS
COMPOSITIONS CONTENANT DU POLYESTERACRYLATE POLYMÉRISABLE PAR RAYONNEMENT

(30) Priorität: 13.10.2016 EP 16193688
(43) Veröffentlichungstag der Anmeldung: 21.08.2019
(73) Patentinhaber: BASF SE, 67056 Ludwigshafen am Rhein (DE)
(72) Erfinder: KIMPEL, Delphine, 67056 Ludwigshafen (DE); TRANTER, Kenneth Shaun, 67056 Ludwigshafen (DE); KUNZ, Daniel, 67056 Ludwigshafen (DE); COHEN, Kathrin, 68163 Mannheim (DE); THUERY, Peter, 67056 Ludwigshafen (DE); ROESCH, Christine, 67056 Ludwigshafen (DE); WAHL, Stefan, 67056 Ludwigshafen (DE)
(74) Vertreter: BASF IP Association
(86) Internationale Anmeldenummer: PCT/EP2017/074935
(87) Internationale Veröffentlichungsnummer: WO 2018/069075

(56) Entgegenhaltungen:
- EP-B1- 0 126 341
- DE-A1- 3 836 370

## Beschreibung

### Gebiet der Erfindung

Die vorliegende Erfindung betrifft Polyesteracrylat-haltige Zusammensetzungen und deren Verwendung zur Herstellung strahlungshärtbarer Überzugsmassen, insbesondere für PVC-Beschichtungen.

EP-B-126,341 beschreibt ein Verfahren zur Herstellung von Estern der (Meth)acrylsäure mit hydroxylgruppenhaltigen organischen Verbindungen, wobei man gesättigte, gegebenenfalls Ethergruppen enthaltende Polyester, die mindestens 2 freie Hydroxylgruppen (OH-Gruppen) pro Molekül enthalten, oder Polyether, die mindestens 2 freie Hydroxylgruppen (OH-Gruppen) pro Molekül enthalten, wobei diese Polyester oder Polyether durchschnittliche Molekulargewichte Mn zwischen 400 und 4000 g/mol aufweisen, mit 100 bis 150 Mol-% - bezogen auf die OH-Gruppen des Polyesters bzw. Polyethers - Acrylsäure oder Methacrylsäure in Gegenwart eines sauren Veresterungskatalysators und mindestens eines Kohlenwasserstoffs, der mit Wasser ein azeotropes Gemisch bildet, sowie geringer Mengen eines Polymerisationsinhibitors unter azeotroper Entfernung des bei der Veresterung entstehenden Wassers bei erhöhter Temperatur verestert, nach der Veresterung den Kohlenwasserstoff destillativ entfernt und nach Neutralisation des Veresterungskatalysators die restliche Acryl- oder Methacrylsäure mit einer der Säurezahl äquivalenten Menge einer mindestens zwei Epoxidgruppen pro Molekül aufweisenden Epoxidverbindung bis zu einer Säurezahl von 5 mg KOH/g oder weniger umsetzt.

### Beschreibung der Erfindung

Bisphenol-A-basierte Polyesteracrylate werden seit langem für strahlungshärtende Beschichtungen eingesetzt. Inzwischen gibt es Anzeichen dafür, dass Bisphenol-A hormonähnliche Wirkungen hat, so dass allein schon aus prophylaktischen Gründen zunehmend eine Tendenz besteht, Bisphenol-A-freie Alternativen zu entwickeln. Beschichtungen auf Basis solcher Alternativen sollen sich gleichwohl durch gute mechanische Eigenschaften sowie gute Chemikalienbeständigkeit auszeichnen.

Aufgabe der vorliegenden Erfindung war es, neue - Bisphenol-A-freie - Polyesteracrylat-haltige Zusammensetzungen bereitzustellen, die sich zur Beschichtung der Oberflächen fester Substrate und insbesondere Kunststoffen - ganz besonders bevorzugt PVC -, eignen, wobei die Aushärtung der Beschichtung durch Strahlenhärtung, insbesondere mit UV-Licht, erfolgt.

Gegenstand der vorliegenden Erfindung sind zunächst strahlungshärtbare Polyesteracrylat-haltige Zusammensetzungen (I), dadurch erhältlich, dass man
- 0,5 bis 20 mol% mindestens eines **Polyesterpolyols (A),** das durch Umsetzung der Reaktanden Adipinsäure, Phthalsäureanhydrid, Ölsäure und Trimethylolpropan hergestellt wurde, wobei das Polyesterpolyol eine OH-Funktionalität im Bereich von 3,0 bis 3,9 aufweist, und
- 0,5 bis 30 mol% mindestens eines **Polyesterdiols (B),** das durch Umsetzung der Reaktanden

Adipinsäure, Isophthalsäure und 2-Butyl-2-ethyl-1,3-propandiol hergestellt wurde, in Gegenwart eines sauren Veresterungskatalysators und in Gegenwart mindestens eines Kohlenwasserstoffs (L), der als Lösungsmittel fungiert und mit Wasser ein azeotropes Gemisch bildet, sowie in Gegenwart mindestens eines Polymerisationsinhibitors unter azeotroper Entfernung von bei der Umsetzung entstehenden Wassers bei Temperaturen im Bereich von 60 bis 140 °C mit
- 1 bis 10 mol% **Phthalsäureanhydrid (C)** und
- 65 bis 75 mol% **(Meth)acrylsäure (D)**
im Sinne einer Veresterung umsetzt, nach der Veresterung den Kohlenwasserstoff (L) destillativ entfernt, nach Neutralisation des Veresterungskatalysators freie (Meth)acrylsäure mit einer der Säurezahl der Reaktionsmischung äquivalenten Menge einer mindestens zwei Epoxidgruppen pro Molekül aufweisenden **Epoxidverbindung (E)** bis zu einer Säurezahl von 5 oder weniger mg KOH/g umsetzt,
wobei folgende Maßgaben gelten:
- Die mol%-Angaben beziehen sich auf die Gesamtmenge der zur Reaktion eingesetzten Verbindungen (A), (B), (C) und (D).
- Das mol-Verhältnis der Verbindungen (A) und (B) liegt im Bereich von 10 : 1 bis 1 : 40.

Der Begriff der OH-Funktionalität ist dem Fachmann vertraut. Er zeigt an, wieviele OH-Gruppen (Hydroxylgruppen) im Mittel pro Molekül vorhanden sind. Reine Diole, wie etwa die Verbindungen (B), haben eine OH-Funktionaliät von 2,0.

Das erfindungsgemäße Verfahren umfasst mithin folgende drei Schritte:
1. Die Umsetzung mindestens eines Polyesterpolyols (A) und mindestens eines Polyesterdiols (B) mit Phthalsäureanhydrid (C) und (Meth)acrylsäure (D) im Sinne einer Veresterung, wobei die Umsetzung in einem Kohlenwasserstoff, der mit Wasser ein Azeotrop bildet, in Gegenwart eines sauren Veresterungskatalysators und mindestens eines Polymerisationsinhibitors unter azeotroper Entfernung des gebildeten Reaktionswassers durchgeführt wird.
2. Die Entfernung des Kohlenwasserstoffs nebst der Neutralisation des Veresterungskatalysators.
3. Die Umsetzung von überschüssiger (Meth)acrylsäure mit einer der Säurezahl der Reaktionsmischung äquivalenten Menge einer mindestens zwei Epoxidgruppen pro Molekül aufweisenden Epoxidverbindung (E) bis zu einer Säurezahl von 5 oder weniger mg KOH/g umsetzt,

Dabei gelten die oben genannten Maßgaben.

Ein weiterer Erfindungsgegenstand betrifft strahlungshärtbare Zusammensetzungen (II), enthaltend 60 bis 100 Gew.% einer Polyesteracrylat-haltigen Zusammensetzung (I) und 0 bis 40 Gew.% Dipropylenglykoldiacrylat (F) - Gew.-% jeweils bezogen auf die die gesamte strahlungshärtbare Zusammensetzung (II).

Ein weiterer Erfindungsgegenstand betrifft Beschichtungsmassen, enthaltend ein oder mehrere Zusammensetzungen (I).
Ein weiterer Erfindungsgegenstand betrifft Beschichtungsmassen, enthaltend ein oder mehrere Zusammensetzungen (II).

### Zu den Verbindungen (A)

Die Polyesterpolyole (A) werden durch Umsetzung der Reaktanden Adipinsäure, Phthalsäureanhydrid, Ölsäure und Trimethylolpropan hergestellt, und weisen eine OH-Funktionalität im Bereich von 3,0 bis 3,9 auf. Vorzugsweise beträgt die OH-Funktionalität 3,6 bis 3,8 und insbesondere 3,7. Die OHZ (Hydroxylzahl) der Verbindungen (A) liegt vorzugsweise im Bereich von 365 bis 400 mg KOH/g. Das mittlere Molgewicht der Verbindungen (A) liegt vorzugsweise im Bereich von 500 bis 600 g/mol.
Bei der Herstellung der Verbindungen (A) werden die Reaktanden vorzugsweise in folgenden Mengen eingesetzt: 10 bis 20 mol% Adipinsäure, 15 bis 30 mol% Phthalsäureanhydrid, 2 bis 20 mol% Ölsäure und 50 bis 70 mol% Trimethylolpropan.

Die Verbindungen (A) werden bei der Veresterung in einer Menge von 0,5 bis 20 mol% und vorzugsweise 5 bis 15 mol% eingesetzt.

### Zu den Verbindungen (B)

Die Polyesterdiole (B) werden durch Umsetzung der Reaktanden Adipinsäure, Isophthalsäure und 2-Butyl-2-ethyl-1,3-propandiol hergestellt.
Die OHZ (Hydroxylzahl) der Verbindungen (B) liegt vorzugsweise im Bereich von 100 bis 300 mg KOH/g. Das mittlere Molgewicht der Verbindungen (B) liegt vorzugsweise im Bereich von 370 bis 1120 g/mol.
Bei der Herstellung der Verbindungen (B) werden die Reaktanden vorzugsweise in folgenden Mengen eingesetzt: 15 bis 20 mol% Adipinsäure, 15 bis 20 mol% Isophthalsäure, und 60 bis 70 mol% 2-Butyl-2-ethyl-1,3-propandiol.
Besonders bevorzugt ist es, die Reaktanden Adipinsäure, Isophthalsäure und 2-Butyl-2-ethyl-1,3-propandiol in einem Molverhältnis von 1 : 1 : 2,7 einzusetzen.
In einer Ausführungsform werden die Reaktanden in folgenden Mengen eingesetzt: 21 mol% Adipinsäure, 21 mol% Isophthalsäure, 58 mol% 2-Butyl-2-ethyl-1,3-propandiol.

Die Verbindungen (B) werden bei der Veresterung in einer Menge von 0,5 bis 30 mol% und vorzugsweise 5 bis 20 mol% eingesetzt.

### Verhältnis der Verbindungen (A) und (B) bei der Veresterung

Das Molverhältnis der Verbindungen (A) und (B) wird auf einen Wert im Bereich von 10 : 1 bis 1 : 40 und insbesondere 3 : 1 bis 1 : 3 eingestellt.

### Zur Verbindung (C)

Bei der Verbindung (C) handelt es sich um Phthalsäureanhydrid. Die Verbindung (C) wird bei der Veresterung in einer Menge von 1 bis 10 mol% und vorzugsweise 3 bis 7 mol% eingesetzt.

### Zu den Verbindungen (D)

Bei den Verbindungen (D) handelt es sich um (Meth)acrylsäure. Darunter ist zu verstehen, dass entweder Acrylsäure oder Methacrylsäure oder Mischungen von Acryl- und Methacrylsäure eingesetzt werden können. Die Verbindungen (D) werden bei der Veresterung in einer Menge von 65 bis 75 mol% eingesetzt.

### Zu den Verbindungen (E)

Bei den Verbindungen (E) handelt es sich um Epoxidverbindungen, die mindestens zwei Epoxidgruppen pro Molekül aufweisen. Besonders bevorzugte Verbindungen (E) sind: 1,4-Butandioldiglycidylether, Pentaerythritoltriglycidylether, 1,6-Hexandioldiglycidylether, Trimethylolpropantriglycidylether, Cyclohexandimethanoldiglycidylether, Glycerintriglycidylether, Polytetrahydrofurandiglycidylether, Polypropylenglycoldiglycidylether.

### Zur Verbindung (F)

Bei der Verbindung (F) handelt es sich um Dipropylenglykoldiacrylat. Wie oben ausgeführt sind die Verbindungen (F) in den Zusammensetzungen (II) enthalten. In diesem Zusammenhang sei ausgeführt, dass die Zusammensetzungen (II) dadurch hergestellt werden können, dass man die Verbindung (F) zu einer Zusammensetzung (I) zudosiert. Es ist aber auch möglich, die Verbindung (F) bereits im Zuge der Herstellung der Zusammensetzungen (I) in einem der drei nachfolgend beschriebenen Schritte 1, 2 oder 3 zuzudosieren.

### Zum Schritt 1 des Verfahrens

Die Verbindungen (A) und (B) werden mit den Verbindungen (C) und (D) in Gegenwart eines sauren Veresterungskatalysators, sowie in Gegenwart eines Kohlenwasserstoffs, der mit Wasser ein azeotropes Gemisch bildet, umgesetzt, vorzugsweise bis zu einem Umsatz (Veresterungsgrad) von mindestens 85% - und insbesondere 90 bis 95%.

Als Veresterungskatalysatoren setzt man vorzugsweise Schwefelsäure, Methansulfonsäure oder p-Toluolsulfonsäure ein. Die Reaktionstemperatur der Veresterung wird auf einen Wert im Bereich von 60 bis 140 °C und insbesondere 90 bis 110 °C eingestellt.

Das gebildete Reaktionswasser wird azeotrop entfernt. Als Schleppmittel werden Kohlenwasserstoffe eingesetzt, die mit Wasser ein Azeotrop bilden können. Dabei können aliphatische und aromatische Kohlenwasserstoffe eingesetzt werden. Beispiele hierfür sind: Alkane und Cycloalkane, wie n-Hexan, n-Heptan, n-Octan, Isooctan, Cyclohexan und Methylcyclohexan, Aromaten wie Benzol, Toluol und die Xylol-Isomeren, ferner sogenannte Spezialbenzine, welche Siedegrenzen zwischen 60 und 140 °C aufweisen.

Zur Vermeidung einer vorzeitigen Polymerisation wird die Veresterung in Gegenwart geringer Mengen eines Polymerisationsinhibitors durchgeführt. Die chemische Natur des Polymerisationsinhibitors unterliegt an sich keinen besonderen Einschränkungen. Vorzugsweise setzt man die dem Fachmann zur Verhinderung einer thermischen Polymerisation einschlägig bekannten Verbindungen ein, beispielsweise Hydrochinon, Hydrochinonmonoalkylether, 2,6-Di-t-butylphenols, N-Nitrosoamine, Phenothiazine oder Phosphorigsäureester. Sie werden vorzugsweise in Mengen von 0,001 bis 2,0 Gew.-% und insbesondere in Mengen von 0,005 bis 0,5 Gew.-% - bezogen auf die Summe der Verbindungen (P1), (P2) und (Meth)acrylsäure - eingesetzt.

### Zu Schritt 2 des Verfahrens

Im Anschluss an Schritt 1 wird der eingesetzte Kohlenwasserstoff aus dem Reaktionsgemisch destillativ, gegebenenfalls unter vermindertem Druck, entfernt. Am Ende von Schritt 2 liegt ein Rohester vor, der auf Grund der in ihm enthaltenen Restmengen an Acryl- und oder Methacrylsäure eine Säurezahl (SZ) von x mg KOH/g aufweist. Diese Säurezahl x wird im nachfolgend beschrieben dritten Schritt des erfindungsgemäßen Verfahrens auf einen Wert y von 5 mg KOH/g oder weniger reduziert.

Im Anschluss an die Entfernung des Kohlenwasserstoffs neutralisiert man den eingesetzten Veresterungskatalysator.

### Zu Schritt 3 des Verfahrens

Im dritten Schritt des erfindungsgemäßen Verfahrens wird der am Ende von Schritt 2 vorliegende Rohester, der auf Grund der in ihm enthaltenen Restmengen an Acryl- und oder Methacrylsäure eine Säurezahl (SZ) von x mg KOH/g aufweist - wobei x eine Säurezahl von 20 mg KOH/g oder höher bedeutet - mit einer der Säurezahl der Reaktionsmischung äquivalenten Menge einer Epoxidverbindung (E), die mindestens zwei Epoxidgruppen pro Molekül enthält, umgesetzt.

Vorzugsweise wird die Umsetzung in Schritt 3 so weit geführt, bis eine Säurezahl y von 5 mg KOH/g oder weniger erreicht ist.

In einer Ausführungsform ist die Menge der eingesetzten Verbindung (E) diejenige, die rechnerisch benötigt wird, um die Säurezahl x des Rohesters auf einen Wert von 0 mg KOH/g abzusenken. Dies bedeutet, dass man eine der Säurezahl x des Rohesters äquivalente Menge an Verbindung (E) einsetzt.

### Verwendung

Ein weiterer Erfindungsgegenstand ist die Verwendung der Zusammensetzungen (I) zur Beschichtung der Oberflächen fester Substrate. Mit dem Begriff "fest" ist dabei der Aggregatzustand des Substrates gemeint. Dabei ist die Art des Substrats an sich nicht beschränkt. Beispiele für geeignete Substrate sind beispielsweise Textil, Leder, Metall, Kunststoff, Kork, Glas, Holz, Papier oder Pappe. In einer besonders bevorzugten Ausführungsform handelt es sich bei den Substraten um Kunststoffe, insbesondere PVC. In einer weiteren bevorzugten Ausführungsform handelt es sich bei den Substraten um Kork.

Ein weiterer Erfindungsgegenstand ist die Verwendung der Zusammensetzungen (II) zur Beschichtung der Oberflächen fester Substrate. Dabei ist die Art des Substrats an sich nicht beschränkt. Beispiele für geeignete Substrate sind beispielsweise Textil, Leder, Metall, Kunststoff, Kork, Glas, Holz, Papier oder Pappe. In einer besonders bevorzugten Ausführungsform handelt es sich bei den Substraten um Kunststoffe, insbesondere PVC. In einer weiteren bevorzugten Ausführungsform handelt es sich bei den Substraten um Kork.

Als Kunststoffe werden - dem üblichen Sprachgebrauch folgend -im Rahmen der vorliegenden Anmeldung organische, polymere Festkörper bezeichnet. Typischerweise teilt man die Kunststoffe in drei großen Gruppen ein, nämlich in Thermoplaste, Duroplaste und Elastomere. Umgangssprachlich werden Kunststoffe auch als Plastik bezeichnet. Üblicherweise werden Kunststoffe synthetisch oder halbsynthetisch aus monomeren organischen Molekülen oder Biopolymeren hergestellt.

Geeignete Substrate für die erfindungsgemäßen Beschichtungsmassen sind beispielsweise thermoplastische Polymere, insbesondere Polymethylmethacrylate, Polybutylmethacrylate, Polyethylenterephthalate, Polybutylenterephthalate, Polyvinylidenfluoride, Polyvinylchloride, Polyester, Polyolefine, Acrylnitrilethylenpropylendienstryolcopolymere (A-EPDM), Polyetherimide, Polyetherketone, Polyphenylensulfide, Polyphenylenether oder deren Mischungen.

Weiterhin genannt seien Polyethylen, Polypropylen, Polystyrol, Polybutadien, Polyester, Polyamide, Polyether, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon.

Folgende Kunststoffe seien als bevorzugt geeignete Kunststoffe genannt: Acrylnitril-Butadien-Styrol (ABS), Polyacrylnitril/Methylmethacrylat (AMMA), Acrylnitril-Styrol-Acrylester (ASA), Epoxidharze (EP), expandiertes Polystyrol (EPS), Ethylen-Vinylacetat Copolymer (EVA), high densitiy Polyethylen (HDPE), low densitiy Polyethylen (LDPE), Methylmethacrylat/Acrylnitril/Butadien/Styrol (MABS), Methylacrylat / Butadien /Styrol Copolymer (MBS), Melamin-Formaldehyd-Harz (MF), Polyamid (PA), Nylon (PA6), Nylon (PA66), Polyacrylnitril (PAN), 1,2-Polybutadien (PB), Polybutylenterephthalat (PBT), Polycarbonat (PC), Polyethylen (PE), chloriertes Polyethylen (PEC), Polyetheretherketon (PEEK), Polyetherimid (PEI), Polyetherketon (PEK), Polyarylethersulfon (PES), Polyethylenterephthalat (PET), Phenol-Formaldehyd-Harz (PF), Polyimid (PI), Polyisobutylen (PIB), Polymethylmethacrylat (PMMA), Polyoxymethylen (POM), Polypropylen (PP), Polyethylensulfid (PPS), Polystyrol (PS), Polysulfon (PSU), Polyurethan (PUR), Polyvinylacetat (PVAC), Polyvinylalkohol (PVAL), Polyvinylchlorid (PVC), Polyvinylidenchlorid (PVDC), Styrol-Acrylnirtil (SAN), Styrol-Butadien (SB), Harnstoff-Formaldehyd-Harz (UF), Ungesättiges Polyesterharz UP-Kunststoffe (Kurzzeichen gemäß DIN 7728) und aliphatische Polyketone.

Besonders bevorzugte Substrate sind Polyolefine, wie z.B. PP (Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PVC (Polyvinylchloride), PMMA (Polymethylmethacrylate), PBT (Po-ly(butylenterephthalate), PA (Polyamide), ASA (Acrylnitril-Styrol-Acrylester-Copolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC.

Ein weiterer Erfindungsgegenstand ist die Verwendung von Beschichtungsmassen, enthaltend ein oder mehrere Zusammensetzungen (I) zur Beschichtung der Oberflächen fester Substrate. Dabei ist die Art des Substrats an sich nicht beschränkt. In einer besonders bevorzugten Ausführungsform handelt es sich bei den Substraten um Kunststoffe, für die das oben Gesagte gilt.

Der Begriff "Beschichtungsmassen" umfasst jegliche Art von Zusammensetzungen, die auf die Oberfläche eines zu beschichtenden Substrates aufgetragen und anschließend - gegebenenfalls nach vorheriger Trocknung - ausgehärtet wird. Insbesondere schließt der Begriff "Beschichtungsmassen" alle Lackarten ein.
Dabei ist - wie dem Fachmann bekannt - unter "Lack" eine Beschichtungsmasse zu verstehen, die flüssig oder auch pulverförmig sein kann, und die in dünner Schicht dünn auf einen Gegenstand, also das zu beschichtende Substrat, aufgetragen wird und dann ausgehärtet wird. Vergleiche hierzu auch den unten stehenden Abschnitt zum Begriff "Beschichten".

Die erfindungsgemäßen Beschichtungsmassen können neben den Zusammensetzungen (I) zusätzlich weitere lacktypische Additive enthalten, beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden. Weiterhin können die erfindungsgemäßen Beschichtungsmassen neben den Verbindungen (I) auch weitere strahlungshärtbare Komponenten enthalten, die nicht von der Formel (I) umfasst sind.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil® der Fa. Evonik, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin® -Marken der BASF SE) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperi-dyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Pigmente können ebenfalls in den Beschichtungsmassen enthalten sein. Pigmente sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel". Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Wird ein Pigment eingesetzt, so ist darauf zu achten, dass entweder die Härtung mit Elektronenstrahlen durchgeführt wird oder dass ein Photoinitiator verwendet wird, der trotz der Pigmentierung durch die eingestrahlte Strahlung aktiviert werden kann, beispielsweise indem der Photoinitiator eine signifikante Absorbanz in einem Wellenlängenbereich aufweist, in dem das Pigment für die eingestrahlte Strahlung ausreichend durchlässig ist. Es stellt eine bevorzugte Ausführungsform der vorliegenden Erfindung dar, kein Pigment zu verwenden und die Beschichtungsmasse in Klarlacken einzusetzen.

Beispiele für Pigmente umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepaßt werden.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Sofern die Aushärtung der Beschichtungsmassen nicht mit Elektronenstrahlen, sondern mittels UV-Strahlung erfolgt, ist vorzugsweise wenigstens ein Photoinitiator enthalten, der die Polymerisation ethylenisch ungesättigter Doppelbindungen (C=C-Doppelbindungen) initiieren kann.

Ganz allgemein können alle dem Fachmann einschlägig bekannten Photoinitiatoren ein gesetzt werden, wie sie beispielsweise in einschlägigen Fachpublikationen und Monographien beschrieben sind.

In Betracht kommen zum Beispiel:
- Mono- oder Bisacylphosphinoxide, etwa 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid,
- Benzophenone, Hydroxyacetophenone, Phenylglyoxylsäure und ihre Derivate oder Gemische dieser Photoinitiatoren. Als Beispiele seien genannt: Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, tert-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon, Benzoin, Benzoin-iso-butylether, Chloroxanthenon, Benzoin-tetrahydropyranylether, Benzoin-methylether, Benzoin-ethylether, Benzoinbutylether, Benzoin-iso-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-tert-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureester-Typ.

Es können auch Gemische verschiedener Photoinitiatoren eingesetzt werden. Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Bevorzugte Photoinitiatoren sind:
- 2,4,6-Trimethylbenzoyldiphenylphosphinoxid,
- Ethyl-2,4,6-trimethylbenzoylphenylphosphinat,
- Bis-(2,4,6-trimethylbenzoyl)-phenylphosphinoxid,
- Benzophenon,
- 1-Benzoylcyclohexan-1-ol,
- 2-Hydroxy-2,2-dimethylacetophenon und
- 2,2-Dimethoxy-2-phenylacetophenon.

Die Beschichtungsmassen enthalten die Photoinitiatoren vorzugsweise in einer Menge von 0,05 bis 10 Gew.-%, besonders bevorzugt 0,1 bis 8 Gew.-%, insbesondere 0,2 bis 5 Gew.-%, bezogen auf die Gesamtmenge der in den Beschichtungsmassen vorhandenen härtbaren Komponenten.

Die Beschichtung der Oberflächen fester Substrate mit den erfindungsgemäß einzusetzenden Zusammensetzungen (I) erfolgt nach üblichen, dem Fachmann bekannten Verfahren, wobei man die gewünschten Zusammensetzungen (I) bzw. eine Beschichtungsmasse, die ein oder mehrere Zusammensetzungen (I) enthält in der gewünschten Stärke auf das Substrat aufbringt und zumindest teilweise strahlungshärtet. Dabei ist eine vollständige Strahlenhärtung bevorzugt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Co-Extrudieren, bevorzugt durch Spritzen und Walzen erfolgen. Als Spritzverfahren können z.B. Luftdruck-, Airless- oder Elektrostatik-Spritzverfahren Anwendung finden.

Wie dem Fachmann bekannt ist unter Strahlenhärtung die radikalische Polymerisation von polymerisierbaren Verbindungen zu verstehen, die induziert wird durch elektromagnetische und/oder korpuskularen Strahlung. Der Einsatz von UV-Licht oder Elektronenstrahlung (Elektronenstrahlung; 150 bis 300 keV) ist bevorzugt. Insbesondere ist UV-Licht im Wellenlängenbereich von 200 bis 500 nm und insbesondere von 250 bis 400 nm bevorzugt.

Die Beschichtungsstärke wird vorzugsweise so eingestellt, dass die Trockenfilmdicke im Bereich von 5 bis 200 µm, und vorzugsweise im Bereich von 5-150 µm liegt. Wie dem Fachmann bekannt, versteht man unter Trockenschichtdicke die Schichtdicke einer getrockneten bzw. ausgehärteten Beschichtung. Der Begriff des Trocknens schließt dabei ein, dass in einer Beschichtungsmasse vorhandene Lösungsmittel, z.B. Wasser oder organische Lösungsmittel, verdunstet sind. Der Begriff des Aushärtens schließt dabei ein, dass eine Vernetzung der Beschichtungsmasse erfolgt. Es sei eigens betont, dass der Begriff der Trockenschichtdicke hier rein phänomenologisch zu verstehen ist als diejenige Schichtdicke, die eine getrocknete und/oder ausgehärteten Beschichtung aufweist.

Die Strahlenhärtung kann gewünschtenfalls bei höheren Temperaturen erfolgen. Bevorzugt ist dabei eine Temperatur oberhalb der T_{g}-Wertes des strahlungshärtbaren Bindemittels (T_{g}-Wert = Glasübergangstemperatur).

Die Strahlenhärtung kann unter sauerstoffhaltiger Atmosphäre oder unter Inertgas erfolgen, wobei letzteres bevorzugt ist.

Neben einer Strahlenhärtung können noch weitere Härtungsmechanismen involviert sein, beispielsweise thermische-, Feuchtigkeits-, chemische und/oder oxidative Härtung.

Gegebenenfalls kann, wenn mehrere Schichten des Beschichtungsmittels übereinander aufgetragen werden, nach jedem Beschichtungsvorgang eine Trocknung und/oder Strahlenhärtung erfolgen.

Als Strahlungsquellen für die Strahlenhärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Laser, gepulste Lampen (Blitzlicht), Halogenlampen Elektronenblitzeinrichtungen, wodurch eine Strahlenhärtung ohne Photoinitiator möglich ist, oder Excimerstrahler.

Es können auch mehrere Strahlungsquellen für die Strahlenhärtung eingesetzt werden, z.B. zwei bis vier. Diese können gewünschtenfalls auch in jeweils unterschiedlichen Wellenlängebereichen strahlen.

Die Bestrahlung kann gegebenenfalls auch unter Ausschluss von Sauerstoff, z. B. unter InertgasAtmosphäre, durchgeführt werden. Als Inertgase eignen sich vorzugsweise Stickstoff, Edelgase, Kohlendioxid, oder Verbrennungsgase.

Ein weiterer Erfindungsgegenstand ist gemäß dem oben Ausgeführten ein Verfahren zum Beschichten der Oberflächen fester Substrate, wobei man Zusammensetzungen (I) oder Beschichtungsmassen, die ein oder mehrere Zusammensetzungen (I) enthalten, auf die Oberfläche eines festen Substrates aufbringt und anschließend eine Strahlenhärtung durchführt, insbesondere mittels UV-Licht.

Unter "Beschichten", auch "coating" genannt, sind dabei Verfahren zu verstehen, die dem Aufbringen einer fest haftenden Schicht auf die Oberfläche eines Werkstückes - dem Substrat - dienen. Die aufgetragene Schicht wird als Beschichtung bezeichnet. Die üblichen Beschichtungsverfahren unterscheiden sich durch die Art der Aufbringung der Beschichtungsmassen in chemische, mechanische, thermische und thermomechanische Verfahren. Im Rahmen der vorliegenden Erfindung ist die UV-Härtung bevorzugt, die eine chemische Vernetzung der in den Beschichtungsmassen enthaltenen Zusammensetzungen (I) bzw. den Zusammensetzungen (II) induziert.

### Beispiele

### Abkürzungen

M = mittleres Molgewicht
FN = OH-Funktionalität
OHZ = OH-Zahl (Hydroxylzahl)

### Eingesetzte Substanzen

Lupraphen® 3904/1: Polyesterpolyol; M=540 g/mol; FN=3,7; OHZ=365-400 mg KOH/g; Handelsprodukt der Fa. BASF SE
Lupraphen® 6800/2: Polyesterpolyol; M=1000 g/mol; FN=2; OHZ=108-116 mg KOH/g; Handelsprodukt der Fa. BASF SE
Lupraphen® 1619/1: Polyesterpolyol; M=2000 g/mol; FN=2; OHZ=53-59 mg KOH/g; Handelsprodukt der Fa. BASF SE
Lupraphen® 7900/1: Polyesterpolyol; M=530 g/mol; FN=3,2; OHZ=320-360 mg KOH/g; Handelsprodukt der Fa. BASF SE
Lupranol 7500/1: Polyetherpolyol; M=278 g/mol; FN=3; OHZ=605 mg KOH/g; Handelsprodukt der Fa. BASF SE
Polyesterpolyol B: M=1000 g/mol; FN=2; OHZ=100-110 mg KOH/g. Das Polyesterdiol B wurde wie folgt hergestellt: 547,2 g Adipinsäure wurden zusammen mit 622 g Isophthalsäure und 1600,7 g Buthylethylpropandiol vorgelegt und erwärmt. Bei einer Temperatur von 180°C wurden 110 mg Titantetrabutylat als Katalysator zugegeben. Die Veresterung erfolgte zunächst etwa 5h lang unter Normaldruck und anschließend weitere 5h lang bei gleichzeitiger rampenförmiger Reduzierung des Drucks auf 60 mbar bei 200-240°C unter Abdestillieren des Reaktionswassers. Der Reaktionsfortschritt wurde anhand der Destillatmenge und der Säurezahl des Reaktionsgemischs verfolgt. Zielsäurezahl: < 1,0 mg KOH/g.
Laromer® DPGDA: Dipropylenglykoldiacrylat; Handelsprodukt der Fa. BASF SE
Glycidether 162: Pentaerythrittriglycidether; Handelsprodukt der Fa. BASF SE
Grilonit® RV 1806: 1,4-Butandioldiglycidylether; Haandelsprodukt der Fa. EMS-Chemie AG Kerobit® TBK (BASF SE) / Vulkanox® BHT (LANXESS GmbH): 2,6-Ditertiärbutyl-p-Kresol.

### Erfindungsgemäße Beispiele:

### Beispiel 1

258,51 g Lupraphen 3904/1, 504,19 g Polyesterpolyol B, 30,38 g Phthalsäureanhydrid und 219,04 g Laromer DPGDA wurden zusammen mit 206,92 g Acrylsäure, 1,27 g Kerobit TBK, 3 g 4-Methoxyphenol, 0,1 g Phenothiazin und 4 g Hypophosphoriger Säure in 333,33 g Methylcyclohexan vorgelegt und auf 100-110°C erwärmt. Bei Erreichen der Reaktionstemperatur wurden 5 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wuden 22,5 g Tetrabutylammoniumbromid und 113,3 g Glycidether 162 zugegeben. Die Umsetzung des Epoxids mit der Acrylsäure wurde bei Temperaturen zwischen 105 und 108°C bis zu einer Säurezahl < 5mg KOH/g durchgeführt.

### Beispiel 2

310,21 g Lupraphen 3904/1, 605,03 g Polyesterpolyol B und 36,46 g Phthalsäureanhydrid wurden zusammen mit 248,31 g Acrylsäure, 1,52 g Kerobit TBK, 3,6 g 4-Methoxyphenol, 0,12 g Phenothiazin und 1,2 g Hypophosphoriger Säure in 400 g Methylcyclohexan vorgelegt und auf 100-110°C erwärmt. Bei Erreichen der Reaktionstemperatur wurden 6 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 27 g Tetrabutylammoniumbromid und 143,8 g Glycidether 162 zugegeben. Die Umsetzung des Epoxids mit der Acrylsäure wurde bei Temperaturen zwischen 105 und 108°C bis zu einer Säurezahl < 5mg KOH/g durchgeführt.

### Beispiel 3

310,21 g Lupraphen 3904/1, 605,03 g Polyesterpolyol B und 36,46 g Phthalsäureanhydrid wurden zusammen mit 248,31 g Acrylsäure, 1,52 g Kerobit TBK, 3,6 g 4-Methoxyphenol, 0,12 g Phenothiazin und 1,2 g Hypophosphoriger Säure in 400 g Methylcyclohexan vorgelegt und auf 100-110°C erwärmt. Bei Erreichen der Reaktionstemperatur wurden 6 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend werden 27 g Tetrabutylammoniumbromid und 143,8 g Glycidether 162 zugegeben. Die Umsetzung des Epoxids mit der Acrylsäure wurde bei Temperaturen zwischen 105 und 108°C bis zu einer Säurezahl < 5mg KOH/g durchgeführt. Dem fertigen Produkt wurden 262 g DPGDA zugesetzt.

### Vergleichsbeispiele

### Vergleichsbeispiel 1

318,22 g Lupraphen 3904/1, 589,65 g Lupraphen 6800/2 und 37,4 g Phthalsäureanhydrid wurden zusammen mit 254,73 g Acrylsäure, 1,2 g Kerobit TBK, 3,6 g 4-Methoxyphenol, 0,04 g Phenothiazin, 1,2 g Triphenylphosphit und 1,2 g Hypophosphoriger Säure in 400 g Methylcyclohexan vorgelegt und auf 100-110°C erwärmt. Bei Erreichen der Reaktionstemperatur wurden 6 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 27 g Tetrabutylammoniumbromid und 140,11 g Glycidether 162 zugegeben. Die Umsetzung des Epoxids mit der Acrylsäure wurde bei Temperaturen zwischen 105 und 108°C bis zu einer Säurezahl < 5mg KOH/g durchgeführt. Dem fertigen Produkt wurden 268 g Laromer DPGDA zugesetzt.

### Vergleichsbeispiel 2

493,91 g Lupraphen 3904/1, 378,64 g Lupraphen 1619/1 und 41,92 g Phthalsäureanhydrid wurden zusammen mit 285,53 g Acrylsäure, 1,2 g Kerobit TBK, 3,6 g 4-Methoxyphenol, 0,04 g Phenothiazin, 1,2 g Triphenylphosphit und 1,2 g Hypophosphoriger Säure in 400 g Methylcyclohexan vorgelegt und auf 100-110°C erwärmt. Bei Erreichen der Reaktionstemperatur wurden 6 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 27 g Tetrabutylammoniumbromid und 137,34 g Glycidether 162 zugegeben. Die Umsetzung der Epoxide mit der Acrylsäure wurde bei Temperaturen zwischen 105 und 108°C bis zu einer Säurezahl < 5mg KOH/g durchgeführt. Dem fertigen Produkt wurden 270,5 g Laromer DPGDA zugesetzt.

### Vergleichsbeispiel 3

411,02 g Lupraphen 3904/1, 500,44 g Lupraphen 1619/1 und 36,94 g Phthalsäureanhydrid wurden zusammen mit 251,59 g Acrylsäure, 1,2 g Kerobit TBK, 3,6 g 4-Methoxyphenol, 0,04 g Phenothiazin, 1,2 g Triphenylphosphit und 1,2 g Hypophosphoriger Säure in 400 g Methylcyclohexan vorgelegt und auf 100-110°C erwärmt. Bei Erreichen der Reaktionstemperatur wurden 6 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 27 g Tetrabutylammoniumbromid und 302,93 g Glycidether 162 zugegeben. Die Umsetzung der Epoxide mit der Acrylsäure wird bei Temperaturen zwischen 105 und 108°C bis zu einer Säurezahl < 5mg KOH/g durchgeführt. Dem fertigen Produkt wurden 320 g Laromer DPGDA zugesetzt.

### Vergleichsbeispiel 4

752,52 g Lupraphen 3904/1 wurden zusammen mit 447,48 g Acrylsäure, 1,2 g Kerobit TBK, 3,6 g 4-Methoxyphenol, 0,04 g Phenothiazin und 1,2 g Hypophosphoriger Säure in 400 g Methylcyclohexan vorgelegt und auf 100-110°C erwärmt. Bei Erreichen der Reaktionstemperatur wurden 6 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 27 g Tetrabutylammoniumbromid und eine Mischung aus 95,2 g Glycidether 162 und 75,37 g Grilonit RV 1806 zugegeben. Die Umsetzung der Epoxide mit der Acrylsäure wurde bei Temperaturen zwischen 105 und 108°C bis zu einer Säurezahl < 5mg KOH/g durchgeführt. Dem fertigen Produkt wurden 281 g Laromer DPGDA zugesetzt.

### Vergleichsbeispiel 5

752,18 g Lupraphen 3904/1 und 37,82 g Phthalsäureanhydrid wurden zusammen mit 410 g Acrylsäure, 1,2 g Kerobit TBK, 3,6 g 4-Methoxyphenol, 0,04 g Phenothiazin und 1,2 g Hypophosphoriger Säure in 400 g Methylcyclohexan vorgelegt und auf 100-110°C erwärmt. Bei Erreichen der Reaktionstemperatur wurden 6 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 27 g Tetrabutylammoniumbromid und 182,15 g Glycidether 162 zugegeben. Die Umsetzung der Epoxide mit der Acrylsäure wurde bei Temperaturen zwischen 105 und 108°C bis zu einer Säurezahl < 5mg KOH/g durchgeführt. Dem fertigen Produkt wurden 282 g Laromer DPGDA zugesetzt.

### Vergleichsbeispiel 6

835,06 g Lupraphen 7900/1 wurden zusammen mit 382,94 g Acrylsäure, 3,08 g 4-Methoxyphenol, 0,03 g Phenothiazin und 1,03 g Kerobit TBK in 340 g Methylcyclohexan vorgelegt und auf 100-110°C erwärmt. Bei Erreichen der Reaktionstemperatur wurden 3 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 5,6 g Dimethylethanolamin, 1,23 g Thiodiglykol und 134,11 g Glycidether 162 zugegeben. Die Umsetzung der Epoxide mit der Acrylsäure wurde bei Temperaturen zwischen 105 und 108°C bis zu einer Säurezahl < 5mg KOH/g durchgeführt.

### Vergleichsbeispiel 7

597,1 g Lupranol 7500/1 wurden zusammen mit 602,9 g Acrylsäure, 1,2 g Kerobit TBK, 3,6 g 4-Methoxyphenol, 0,04 g Phenothiazin, 1,2 g Triphenylphosphit und 1,2 g Hypophosphorige Säure in 400 g Methylcyclohexan vorgelegt und auf 100-110°C erwärmt. Bei Erreichen der Reaktionstemperatur wurden 3 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 30 g Tetrabutylammoniumbromid und 826,14 g Epikote 828 zugegeben. Die Umsetzung der Epoxide mit der Acrylsäure wurde bei Temperaturen zwischen 105 und 108°C bis zu einer Säurezahl < 5mg KOH/g durchgeführt.

### Vergleichsbeispiel 8

688 g Lupranol 7500/1 wurden zusammen mit 279,6 g Adipinsäure, 293 g Acrylsäure, 1,2 g Kerobit TBK, 2,8 g 4-Methoxyphenol, 0,09 g Phenothiazin, und 2,7 g Hypophosphorige Säure in 320 g Methylcyclohexan vorgelegt und auf 100-110°C erwärmt. Bei Erreichen der Reaktionstemperatur wurden 6,9 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 34,5 g Tetrabutylammoniumbromid und 61,2 g Glycidether 162 zugegeben. Die Umsetzung der Epoxide mit der Acrylsäure wurde bei Temperaturen zwischen 105 und 108°C bis zu einer Säurezahl < 5mg KOH/g durchgeführt.

### Vergleichsbeispiel 9

597,1 g Lupranol 7500/1 wurden zusammen mit 138,3 g Adipinsäure, 192,3 g Acrylsäure, 0,6 g Kerobit TBK, 1,8 g 4-Methoxyphenol, 0,02 g Phenothiazin, 0,6 g Triphenylphosphit und 0,6 g Hypophosphorige Säure in 200 g Methylcyclohexan vorgelegt und auf 100-110°C erwärmt. Bei Erreichen der Reaktionstemperatur wurden 3 g Schwefelsäure zugegeben. Der Fortschritt der azeotropen Veresterung wurde über die ausgekreiste Wassermenge überwacht. Nach Erreichen der dem angestrebten Umsatz entsprechenden Wassermenge wurde die Säurezahl bestimmt und bei Bedarf durch Zugabe von Acrylsäure auf den gewünschten Wert aufgestockt. Anschließend wurden 11,3 g Tributylamin und 79,83 g Epikote 828 zugegeben. Die Umsetzung der Epoxide mit der Acrylsäure wurde bei Temperaturen zwischen 105 und 108°C bis zu einer Säurezahl < 5mg KOH/g durchgeführt.

### Anwendungstechnische Untersuchungen

Mit den gemäß den obigen Beispielen und Vergleichbeispielen hergestellten Substanzen wurde PVC beschichtet und zwar wie folgt:
Die Harze wurden folgendermaßen formuliert: 100g des Harzes wurden durch Zugabe von Laromer DPGDA (= Reaktivverdünner) auf eine Verarbeitungsviskosität von 800 mPas eingestellt und mit 4,2 Gew% (bezogen auf die Gesamtformulierung) Irgacure 500 (= Photoinitiator) versetzt.

Härtung: Die UV-Härtung erfolgte durch Bestrahlung in einer IST UV-Anlage auf einem Transportband mit 5 m/min mit 1 UV-Lampe (200 W/cm, Quecksilbermitteldrucklampe, Leistung 50 %, Dosis 1500-1750 mJ/cm²).
Danach erfolgte eine Bewertung der Flexibilität (Biegetest) und der Chemikalienbeständigkeit im Hinblick auf Iod, Kaliumpermanganat, Eosin und einen handelsüblichen Markierstift (Typ: BIC-Onyx). Die Ergebnisse sind in der unten stehenden Tabelle 1 aufgeführt.

### Zu den Prüfmethoden im Einzelnen:

**Biegetest:** In Tabelle 1 angegeben ist die Anzahl der Risse. Der Test wurde wie folgt durchgeführt: Der formulierte Lack wurde mit Hilfe eines Kastenrakels in einer Schichtdicke von 12-15 µm auf das PVC-Substrat aufgebracht und wie oben beschrieben gehärtet. Anschließend wurde das Substrat in einem Winkel von 360° gebogen und die Anzahl der auftretenden Risse beurteilt.

**Chemikalienbeständigkeit gegen Iod (1 % in Ethanol):** In Tabelle 1 angegeben ist ein Wert auf einer notenähnlichen Skala von -3 bis +3. Dabei repräsentiert ein Wert von 0 ein Ergebnis, dass einem üblichen Industriestandard entspricht. Werte von -3 sind sehr schlecht. Werte von + 3 sind ganz ausgezeichnet. Der Test wurde wie folgt durchgeführt: Der Lack wurde mit einem Kastenrakel in einer Schichtdicke von 12-15 µm auf das Substrat aufgebracht und wie oben beschrieben gehärtet. Anschließend wurde ein mit einer 1%igen ethanolischen Iod-Lösung getränktes Pad aufgelegt und mit einem Gläschen überdeckt. Nach 20 min wurden Gläschen und Pad entfernt, die Prüffläche mit einem Tuch und Wasser vorsichtig gereinigt und die Verfärbung direkt optisch beurteilt.

**Chemikalienbeständigkeit gegen KMnO₄ (1% in Wasser):** In Tabelle 1 angegeben ist ein Wert auf einer notenähnlichen Skala von -3 bis +3. Dabei repräsentiert ein Wert von 0 ein Ergebnis, dass einem üblichen Industriestandard entspricht. Werte von -3 sind sehr schlecht. Werte von + 3 sind ganz ausgezeichnet. Der Test wurde wie folgt durchgeführt: Der Lack wurde mit einem Kastenrakel in einer Schichtdicke von 12-15 µm auf das Substrat aufgebracht und wie oben beschrieben gehärtet. Anschließend wurde ein mit einer 1%igen wässrigen KMnO₄-Lösung getränktes Pad aufgelegt und mit einem Gläschen überdeckt. Nach 20 min wurden Gläschen und Pad entfernt, die Prüffläche mit einem Tuch und Wasser vorsichtig gereinigt und die Verfärbung direkt optisch beurteilt.

**Chemikalienbeständigkeit gegen Eosin (2% in Ethanol):** In Tabelle 1 angegeben ist ein Wert auf einer notenähnlichen Skala von -3 bis +3. Dabei repräsentiert ein Wert von 0 ein Ergebnis, dass einem üblichen Industriestandard entspricht. Werte von -3 sind sehr schlecht. Werte von + 3 sind ganz ausgezeichnet. Der Test wurde wie folgt durchgeführt: Der Lack wurde mit einem Kastenrakel in einer Schichtdicke von 12-15 µm auf das Substrat aufgebracht und wie oben beschrieben gehärtet. Anschließend wurde ein mit einer 2%igen ethanolischen Eosin-Lösung getränktes Pad aufgelegt und mit einem Gläschen überdeckt. Nach 20 min wurden Gläschen und Pad entfernt, die Prüffläche mit einem Tuch und Wasser vorsichtig gereinigt und die Verfärbung direkt optisch beurteilt.

**Chemikalienbeständigkeit gegen BIC Onyx:** In Tabelle 1 angegeben ist ein Wert auf einer notenähnlichen Skala von -3 bis +3. Dabei repräsentiert ein Wert von 0 ein Ergebnis, dass einem üblichen Industriestandard entspricht. Werte von -3 sind sehr schlecht. Werte von + 3 sind ganz ausgezeichnet. Der Test wurde wie folgt durchgeführt: Der Lack wurde mit einem Kastenrakel in einer Schichtdicke von 12-15 µm auf das Substrat aufgebracht und wie oben beschrieben gehärtet. Anschließend wurden mit einem Onyx-Textmarker der Fa. BIC 10 Doppelhübe auf der Prüffläche ausgeführt, die Prüffläche mit einem Tuch und Wasser vorsichtig gereinigt und die Verfärbung direkt optisch beurteilt.

**Tabelle 1: Ergebnisse der anwendungstechnischen Untersuchungen**

| | Biegetest | Iod-Test | KMnO₄- Test | Eosin- Test | BIC-Onyx -Test |
|---|---|---|---|---|---|
| Beispiel 1 | keine Risse | 0 | +3 | 0 | -1 |
| Beispiel 2 | keine Risse | +1 | +3 | +1 | 0 |
| Beispiel 3 | keine Risse | 0 | +3 | 0 | -1 |
| Vergleich 1 | keine Risse | -3 | -2 | 0 | -3 |
| Vergleich 2 | wenige Risse | -1 | 0 | 0 | -3 |
| Vergleich 3 | einige Risse | 0 | -1 | 0 | -2 |
| Vergleich 4 | viele Risse | 0 | 0 | 0 | -1 |
| Vergleich 5 | viele Risse | 0 | +1 | 0 | -1 |
| Vergleich 6 | einige Risse | -2 | 0 | 0 | -1 |
| Vergleich 7 | viele Risse | 0 | 0 | 0 | 0 |
| Vergleich 8 | wenige Risse | -2 | -3 | -1 | -1 |
| Vergleich 9 | einige Risse | -2 | -3 | -1 | +2 |

## Patentansprüche

1. Strahlungshärtbare Polyesteracrylat-haltige Zusammensetzungen (I), dadurch erhältlich, dass man
• 0,5 bis 20 mol% mindestens eines **Polyesterpolyols (A),** das durch Umsetzung der Reaktanden Adipinsäure, Phthalsäureanhydrid, Ölsäure und Trimethylolpropan hergestellt wurde, wobei das Polyesterpolyol eine OH-Funktionalität im Bereich von 3,0 bis 3,9 aufweist, und
• 0,5 bis 30 mol% mindestens eines **Polyesterdiols (B),** das durch Umsetzung der Reaktanden Adipinsäure, Isophthalsäure und 2-Butyl-2-ethyl-1,3-propandiol hergestellt wurde,
in Gegenwart eines sauren Veresterungskatalysators und in Gegenwart mindestens eines Kohlenwasserstoffs (L), der als Lösungsmittel fungiert und mit Wasser ein azeotropes Gemisch bildet, sowie in Gegenwart mindestens eines Polymerisationsinhibitors unter azeotroper Entfernung von bei der Umsetzung entstehenden Wassers bei Temperaturen im Bereich von 60 bis 140 °C mit
• 1 bis 10 mol% **Phthalsäureanhydrid (C)** und
• 65 bis 75 mol% **(Meth)acrylsäure (D)**
im Sinne einer Veresterung umsetzt, nach der Veresterung den Kohlenwasserstoff (L) destillativ entfernt, nach Neutralisation des Veresterungskatalysators freie (Meth)acrylsäure mit einer der Säurezahl der Reaktionsmischung äquivalenten Menge einer mindestens zwei Epoxidgruppen pro Molekül aufweisenden **Epoxidverbindung (E)** bis zu einer Säurezahl von 5 oder weniger mg KOH/g umsetzt,
wobei folgende Maßgaben gelten:
• Die mol%-Angaben beziehen sich auf die Gesamtmenge der zur Reaktion eingesetzten Verbindungen (A), (B), (C) und (D).
• Das mol-Verhältnis der Verbindungen (A) und (B) liegt im Bereich von 10 : 1 bis 1 : 40.

2. Strahlungshärtbare Zusammensetzungen (II), enthaltend 60 bis 100 Gew.% einer Polyesteracrylat-haltigen Zusammensetzung (I) gemäß Anspruch 1 und 0 bis 40 Gew.% **Dipropylenglykoldiacrylat (F)** - Gew.-% jeweils bezogen auf die die gesamte strahlungshärtbare Zusammensetzung (II).

3. Beschichtungsmassen, enthaltend ein oder mehrere Zusammensetzungen (I) gemäß Anspruch 1.

4. Beschichtungsmassen, enthaltend ein oder mehrere Zusammensetzungen (II) gemäß Anspruch 2.

5. Verwendung der Zusammensetzungen (I) gemäß Anspruch 1, zur Beschichtung der Oberflächen fester Substrate.

6. Verwendung nach Anspruch 5, wobei es sich bei den festen Substraten um PVC handelt.

7. Verwendung nach Anspruch 5, wobei es sich bei den festen Substraten um Kork handelt.

8. Verwendung der Zusammensetzungen (II) gemäß Anspruch 2, zur Beschichtung der Oberflächen fester Substrate.

9. Verwendung nach Anspruch 8, wobei es sich bei den festen Substraten um PVC handelt.

10. Verwendung nach Anspruch 8, wobei es sich bei den festen Substraten um Kork handelt.

## Claims

1. A radiation-curable, polyester acrylate-containing composition (I) obtainable by reacting
• 0.5 to 20 mol% of at least one **polyester polyol (A),** prepared by reaction of the reactants adipic acid, phthalic anhydride, oleic acid and trimethylolpropane, where the polyester polyol has an OH functionality in the range from 3.0 to 3.9, and
• 0.5 to 30 mol% of at least one **polyester diol (B),** prepared by reaction of the reactants adipic acid, isophthalic acid, and 2-butyl-2-ethyl-1,3-propanediol,
in the presence of an acidic esterification catalyst and in the presence of at least one hydrocarbon (L) which functions as solvent and forms an azeotropic mixture with water, and also in the presence of at least one polymerization inhibitor, with azeotropic removal of water formed in the reaction, at temperatures in the range from 60 to 140°C, with
• 1 to 10 mol% of **phthalic anhydride (C)** and
• 65 to 75 mol% of **(meth)acrylic acid (D)** in an esterification, removing the hydrocarbon (L) distillatively after the esterification, and, after neutralization of the esterification catalyst, reacting free (meth)acrylic acid with an **epoxide compound (E)** in an amount equivalent to the acid number of the reaction mixture, the compound (E) having at least two epoxide groups per molecule, reaction taking place to an acid number of 5 or fewer mg KOH/g,
subject to the following provisos:
• the mol% figures are based on the total amount of the compounds (A), (B), (C) and (D) used for the reaction;
• the molar ratio of the compounds (A) and (B) is in the range from 10:1 to 1:40.

2. A radiation-curable composition (II) comprising 60 to 100 wt% of a polyester acrylate-containing composition (I) according to claim 1 and 0 to 40 wt% of **dipropylene glycol diacrylate (F)** - wt% based in each case on the overall radiation-curable composition (II).

3. A coating compound comprising one or more than one composition (I) according to claim 1.

4. A coating compound comprising one or more than one composition (II) according to claim 2.

5. The use of a composition (I) according to claim 1 to coat the surfaces of solid substrates.

6. The use according to claim 5, wherein the solid substrates comprise PVC.

7. The use according to claim 5, wherein the solid substrates comprise cork.

8. The use of a composition (II) according to claim 2 to coat the surfaces of solid substrates.

9. The use according to claim 8, wherein the solid substrates comprise PVC.

10. The use according to claim 8, wherein the solid substrates comprise cork.

## Revendications

1. Compositions contenant de l'acrylate de polyester durcissables par rayonnement (I), pouvant être obtenues en ce que
- 0,5 à 20 % en moles d'au moins un **polyester-polyol (A),** qui a été fabriqué par mise en réaction des réactifs acide adipique, anhydride de l'acide phtalique, acide oléique et triméthylolpropane, le polyester-polyol présentant une fonctionnalité OH dans la plage allant de 3,0 à 3,9, et
- 0,5 à 30 % en moles d'au moins un **polyester-diol (B),** qui a été fabriqué par mise en réaction des réactifs acide adipique, acide isophtalique et 2-butyl-2-éthyl-1,3-propanediol,
sont mis en réaction en présence d'un catalyseur d'estérification acide et en présence d'au moins un hydrocarbure (L), qui sert de solvant et forme un mélange azéotropique avec de l'eau, ainsi qu'en présence d'au moins un inhibiteur de polymérisation avec élimination azéotropique d'eau formée lors de la mise en réaction à des températures dans la plage allant de 60 à 140 °C avec
- 1 à 10 % en moles **d'anhydride de l'acide phtalique (C)** et
- 65 à 75 % en moles d'**acide (méth)acrylique (D),**
au sens d'une estérification, l'hydrocarbure (L) est éliminé par distillation après l'estérification, de l'acide (méth)acrylique libre est mis en réaction après la neutralisation du catalyseur d'estérification avec une quantité, équivalente à l'indice d'acidité du mélange réactionnel, d'un **composé d'époxyde (E)** comprenant au moins deux groupes époxyde par molécule jusqu'à un indice d'acidité de 5 ou moins mg KOH/g,
les conditions suivantes s'appliquant :
- les données en % en moles se rapportent à la quantité totale des composés (A), (B), (C) et (D) utilisés pour la réaction,
- le rapport molaire des composés (A) et (B) se situe dans la plage allant de 10:1 à 1:40.

2. Compositions durcissables par rayonnement (II), contenant 60 à 100 % en poids d'une composition contenant de l'acrylate de polyester (I) selon la revendication 1 et 0 à 40 % en poids **de diacrylate de dipropylène glycol (F),** les % en poids se rapportant à chaque fois à la composition durcissable par rayonnement (II) totale.

3. Matériaux de revêtement, contenant une ou plusieurs compositions (I) selon la revendication 1.

4. Matériaux de revêtement, contenant une ou plusieurs compositions (II) selon la revendication 2.

5. Utilisation des compositions (I) selon la revendication 1, pour le revêtement des surfaces de substrats solides.

6. Utilisation selon la revendication 5, dans laquelle les substrats solides consistent en du PVC.

7. Utilisation selon la revendication 5, dans laquelle les substrats solides consistent en du liège.

8. Utilisation des compositions (II) selon la revendication 2, pour le revêtement des surfaces de substrats solides.

9. Utilisation selon la revendication 8, dans laquelle les substrats solides consistent en du PVC.

10. Utilisation selon la revendication 8, dans laquelle les substrats solides consistent en du liège.
